# EUROPÄISCHE PATENTANMELDUNG

(11) **EP 0 950 598 A1**
(43) Veröffentlichungstag der Anmeldung: **20.10.1999**
(21) Anmeldenummer: 99106902.2
(22) Anmeldetag: 08.04.1999
(51) Int. Cl.: B61L 25/02, G01S 5/00, G01S 5/14

(54) **Satellitenortungsvorrichtung**

(30) Priorität: 15.04.1998 DE 19816435
(71) Anmelder: Deutsche Bahn Aktiengesellschaft, 10365 Berlin (DE)
(72) Erfinder: Klier, Franz, 85296 Rohrbach (DE); Kuhla, Eckhard, 82205 Gilching (DE)

(57) **Zusammenfassung**

Die Erfindung betrifft eine Satellitenortungsvorrichtung, insbesondere ein Satelliten Handy zur Verfolgung und Überwachung von Schienenfahrzeugen ohne Spannungsquelle. Das Satelliten Handy beinhaltet diverse Sensorik, ein Kommunikationsmodul, einen Stoßmesser, optionalen weiteren Schnittstellen und einen wiederaufladbaren Hochleistungsakku.

Das Satelliten Handy ist so konzipiert, daß es auf einfache Weise jeweils in der Signalstütze der Güterwagen diebstahlsicher untergebracht wird.

## Beschreibung

Die Erfindung betrifft eine Satellitenortungsvorrichtung, insbesondere ein Satelliten Handy zur Verfolgung und Überwachung von Schienenfahrzeugen ohne Spannungsquelle gemäß dem Oberbegriff des Anspruches 1. Mit dem Satelliten Handy besteht die Möglichkeit, den Transport von Güterwagen auf Strecken der europäischen Bahnen kurzfristig zu verfolgen bzw. zu überwachen, ohne daß Montageaufwand am Fahrzeug entsteht.

Aus den Anmeldungen
WO 89/05 255
US 51 29 605
DE 41 23 632 A1
DE 44 28 261 A1
DE 44 08 261 A1
DE 43 31 432 C1
DE 196 121 225
DE 44 23 673
DE 43 31 931
DE 196 11 774
EP 0 748 081 A1
DE 195 44 158 A1
sind Informationsübertragungssysteme per Mobilkommunikationseinrichtung an eine zentrale Einsatzstelle bekannt. Diese Systeme verfügen jedoch nicht über wiederaufladbare kompakte Überwachungsgeräte und über die dargestellte Befestigung.

Aufgabe der Erfindung ist es, die Möglichkeit zu schaffen, Transport bzw. Eisenbahnfahrzeuge ohne eigene Energieversorgung, wie bei den meisten Eisenbahngüterwaggons üblich, bei Bedarf kurzfristig mit wiederaufladbaren Überwachungsgeräten sogenannten Satelliten Handys, die diverse Sensorik ein Kommunikationsmodul, einen Stoßmesser, optionalen weiteren Schnittstellen und einen wiederaufladbaren Hochleistungsakku beinhalten, auszustatten.

Dies ist möglich, durch
- die kompakte Bauweise des Gerätes
- handlichen, flexiblen Geräteeinsatz
- schnelles An- und Abmontieren
- die Möglichkeit der Anbringung und der Funktion zwischen den Fahrzeugen
- die Anbringung des Gerätes an der bei Schienenfahrzeugen üblichen Signalstütze nach UIC-Merkblatt 532
- die Ausstattung der Befestigung mit einer vorgelagerten Signalstütze für die Fälle, in denen sich das Gerät am Zugschluß befindet (Vermeidung betrieblicher Einschränkungen).

In einem kleinen kompakten Gehäuse sind folgende handelsübliche Bauteile untergebracht:
- CPU-Einheit
- GPS-Empfänger
- GSM (SMS)-Modul und/oder Inmarsat oder anderes Satellitenkommunikationsmodul
- Kombinierte GPS/GSM-Antenne
- Stoßmesser für 3 Koordinaten
- Schnittstelle für weitere optionale Sensoren
- Wiederaufladbarer Hochleistungsakku

Das Gerät ist so konzipiert, daß es auf einfache Weise jeweils in der Signalstütze der Fahrzeuge angebracht und diebstahlsicher verriegelt wird. Die Befestigung des Gerätes in der Signalstütze ist so ausgeführt, daß nach dem Einstecken in die Signalstützenlasche eine Art Riegel die Entnahme nicht mehr zuläßt. Die Aktivierung des Gerätes wird erst mit dem Einstecken in o. g. Lasche bzw. mit der Anbringung am Fahrzeug aktiviert.

In frei konfigurierbaren Zeitintervallen meldet sich das Gerät über eine Leitstelle mit Positions-, Zeit- und Sensordaten automatisch. Bei einer Überschreitung eines individuell einstellbaren Schwellwertes für die Sensorik erfolgt ebenfalls eine Mitteilung als Alarmmeldung mit entsprechend zugehöriger Positionsangabe. Sollte es notwendig werden, Parameter am Satelliten Handy während der Fahrt zu ändern, oder gezielt eine Positions- oder Statusmeldung vom Gerät zu erhalten, so ist dies über Pollingbetrieb (gezielte Abfrage) möglich.

Die Kommunikation zwischen dem Satelliten Handy und dem Leitstand geschieht derzeit über GSM (SMS). D. h. der Funktionsbereich dieses Gerätes erstreckt sich auf Europa in Abhängigkeit der GSM (SMS) Verfügbarkeit. Eine weltweite Funktion und Einsatzbarkeit des Systems ist durch Ergänzung mit einem Satellitenkommunikationsgerätes möglich.

Um nun einen breiteren Zugriff auf diese generierten Daten zu ermöglichen, ist der Leitstandrechner mit dem Internet verbunden. Damit besteht die Möglichkeit, unter Verwendung von einem individuellen Passwort, die oben genannten Bedingungen sowie z. B. die Visualisierung der Fahrzeugpositionen in einer Europakarte oder die Übertragung dieser Daten in ein firmenspezifisches Softwaresystem, über jeden PC mit Internetanschluß oder vergleichbaren Einrichtungen zu gewährleisten.

Nachfolgend wird die Erfindung an einem Ausführungsbeispiel näher erläutert:
Figur 1 zeigt die Beschreibung des Gesamtsystems
Figur 2 zeigt die Signalstütze nach UIC-Merkblatt 532

### Bezugszeichen:

1. Satelliten Handy
2. Gehäuse
3. Signalstütze
4. GPS Satellit
5. GSM Station
6. Leitstelle (Customer Service Center)

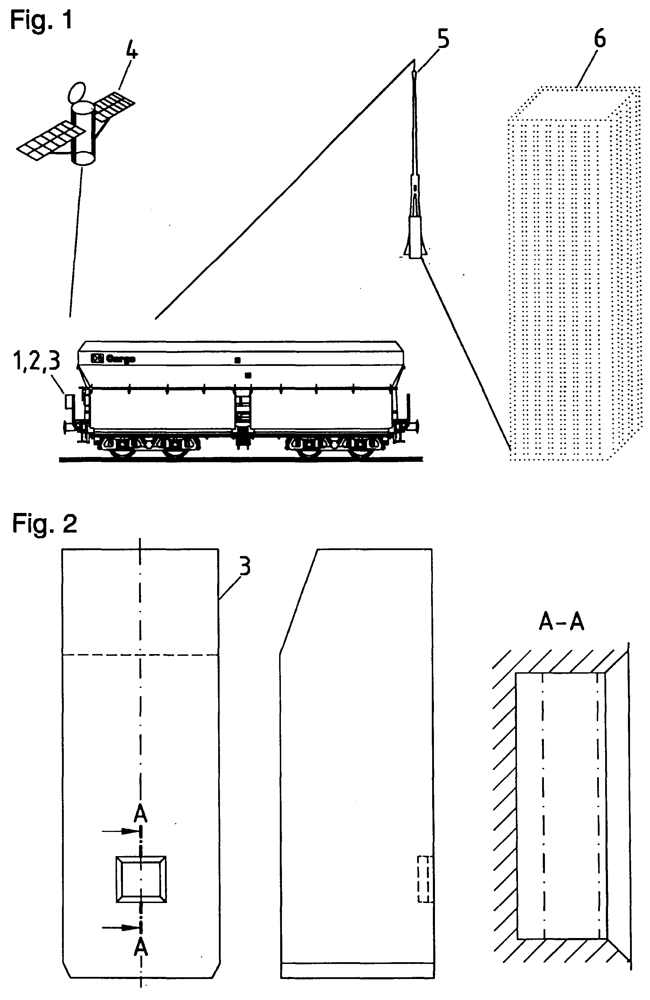

Wie in Figur 1 dargestellt, besteht das Satelliten Handy (1) aus einem kleinen, kompakten Gehäuse (2) in dem die verschiedenen handelsüblichen Bauteile untergebracht sind. Das Gerät (1) ist so konzipiert, da es auf einfache Weise jeweils in der Signalstütze (3) der Fahrzeuge angebracht und diebstahlsicher verriegelt ist.

In frei konfigurierbaren Zeitintervallen meldet sich das Gerät über eine leitstelle (6) mit Positionsdaten die mittels GPS (4) ermittelt werden, mit Zeit- und Sensordaten automatisch. Bei einer Überschreitung eines individuell einstellbaren Schwellwertes für die Sensorik erfolgt ebenfalls eine Mitteilung als Alarmmeldung mit entsprechend zugehöriger Positionsangabe.

Die Kommunikation zwischen dem Satelliten Handy und dem Leitstand geschieht derzeit über GSM (5).

## Patentansprüche

1. Satellitenortungsvorrichtung, inbesondere Satelliten Handy (1) zur Verfolgung und Überwachung von Schienenfahrzeugen ohne Spannungsquelle, dadurch gekennzeichnet, daß diese Vorrichtung in kompakter, handlicher Bauweise mit CPU-Einheit, GPS-Empfänger, GSM Modul, kombinierter GPS/GSM-Antenne, Stoßmesser für 3 Koordinaten, Schnittstelle für weitere optionale Sensoren und einem wiederaufladbaren Hochleistungsakku in einem Gehäuse (2) untergebracht ist und an der bei Schienenfahrzeugen üblichen Signalstütze (3) angebracht und diebstahlsicher verriegelt ist und außerdem derart ausgebildet ist, daß mittels GPS (4) generierte Ortungsdaten über GSM (5) an eine Leitstelle (6) weiterleitbar sind.

2. Satellitenortungsvorrichtung nach Anspruch 1, dadurch gekennzeichnet, daß bei Einsatz am Zugschluß mit zwei Zugschlußtafeln und damit mit zwei Signalstützen (3) der Halter für das Satelliten Handy (1) grundsätzlich mit einer vorgelagerten weiteren Signalstütze ausgestattet ist.
